# EUROPEAN PATENT SPECIFICATION

(11) **EP 1 114 970 B1**
(45) Date of publication and mention of the grant of the patent: **23.03.2005**
(21) Application number: 99943320.4
(22) Date of filing: 13.09.1999
(51) Int. Cl.: F24F 7/08, F24F 11/02, F24F 11/04, F24F 11/00

(54) **VENTILATING SYSTEM**
BELÜFTUNGSSYSTEM
SYSTEME DE VENTILATION

(30) Priority: 14.09.1998 JP 26031198
(43) Date of publication of application: 11.07.2001
(73) Proprietor: Daikin Industries, Limited, Osaka-shi, Osaka 530-0015 (JP)
(72) Inventor: TAKAHASHI, Takashi, 1304, Kanaoka Sakai-shi Osaka 591-8022 (JP)
(74) Representative: Steil, Christian, Dipl.-Ing.
(86) International application number: PCT/JP1999/004997
(87) International publication number: WO 2000/016019

(56) References cited:
- JP-A- 6 123 469
- JP-A- 7 019 574
- JP-A- 10 009 634
- JP-A- 61 049 949
- JP-A- 62 026 434
- US-A- 4 497 242
- US-A- 5 119 987
- US-A- 5 257 736

## Description

The present invention relates to a ventilation system according to the preamble of claim 1 (US 5,119,987 A).

The present invention relates in general, to a ventilation system installed in a construction such as a house and a building.

Airtightness has been increased in recent houses due to heavy usage of aluminum sashes and improvements in construction methods. Above all, airtight houses in which the airtightness is particularly raised for the sake of air conditioning efficiency have been proposed by housing manufacturers. These airtight houses need to be provided with a ventilation system for forcibly introducing outside air into a room and exhausting air within the room from the room to the outside.

Conventionally, ventilation systems are equipped with a ventilation device including inside an air supply fan and an air exhaust fan. Each of the air supply fan and the exhaust fan is connected through a duct to an air inlet and an exhaust outlet, respectively, which are disposed, for example, in the ceiling of a living room, so that outside air is introduced through the air inlet into the living room while air inside the living room is exhausted through the exhaust outlet.

Blowing capacities of the air supply fan and the exhaust fan are set, during construction, according to the plan or the like of the room that is provided with the air inlet and the exhaust outlet. For example, when a toilet is located adjacent to the living room, the volume of air supply is set higher than the volume of exhaust so that the air pressure in the living room is higher than that in the toilet, thereby preventing the air (odor) of the toilet from flowing into the living room.

Meanwhile, the air supply-rich ventilation in which the volume of air supply is larger than the volume of exhaust is not necessarily preferable for ventilation of living rooms. For instance, there may be a situation in a living room in which one may want to have air contaminated with tobacco smoke promptly let out. In such a case, it is preferable to perform exhaust-rich ventilation in which the volume of exhaust is larger than the volume of air supply.

However, in the conventional ventilation systems, the capacities of the air supply fan and the exhaust fan preset during the construction could not be changed at the time of use. Accordingly, users were not able to freely switch the ventilating condition between air supply-rich ventilation and exhaust-rich ventilation according to the condition of the living room.

The volume of air supply and the volume of exhaust are determined not only by the capacities of the air supply fan and the exhaust fan, but also by the length and the girth of each duct extending from the air supply fan to the air inlet or extending from the exhaust outlet to the exhaust fan. Accordingly, even if the capacities of both fans are set equally upon installation for the sake of equality in volume between the air supply and the exhaust, such equality is not realized, if the air supply duct and the exhaust duct are different in length. For this reason, setting of the air supply fan and the exhaust fan during the construction tends to take time.

The problems described so far are not only of the ventilation systems installed in the airtight houses mentioned above, but shared commonly by ventilation systems for ordinary houses and buildings.

A primary object of this invention is to provide a ventilation system capable of freely changing blowing capacities of an air supply fan and an exhaust fan.

Another object of this invention is to provide a ventilation system that realizes comfortable air conditioning desired by the user.

The problems described above may be overcome by the invention according to claim 1.

The invention relates to a ventilation system for forcibly introducing outside air into a room and exhausting air within the room from the room to the outside, comprising an air inlet and an exhaust outlet disposed to face inside the room, an air supply fan for introducing outside air into the room through the air inlet, an exhaust fan for exhausting air within the room from the room to the outside through the exhaust outlet, capacity setting means for setting blowing capacities of the air supply fan and the exhaust fan, and control means for controlling drive of the air supply fan and the exhaust fan.

The capacity setting means include pattern selection keys for selecting one pattern from among a plurality of setting patterns available by combination of the blowing capacity of the air supply fan and that of the exhaust fan.

In the arrangement described above, the blowing capacities of the air supply fan and the exhaust fan can be freely set by the capacity setting means. Accordingly, the operating condition of the ventilation system can be switched into various operation modes including an air supply-rich operation in which the volume of air supply is larger than the volume of exhaust, an exhaust-rich operation in which the volume of exhaust exceeds the volume of air supply, a neutral operation in which the volume of air supply equals to the volume of exhaust, and so forth, by which appropriate ventilation according to the condition of the room can be realized.

The pattern selection keys allow the user to select a desired pattern from among preset patterns without requiring separate setting of each blowing capacity of the air supply fan and the exhaust fan, thereby facilitating the operation.

The capacity setting means may include manual setting keys capable of separately setting each of the blowing capacities of the air supply fan and exhaust fan among a plurality of levels. Irrespective of the length and girth of each duct connecting the air supply fan to the air inlet or connecting the exhaust fan to the exhaust outlet, it is possible to select an operation mode from among the air supply-rich operation, the exhaust-rich operation and the neutral operation, by separately setting each of the blowing capacities of the air supply fan and the exhaust fan with these manual setting keys.

In addition, as stated in claim 2 the capacity setting means may be provided with an extra-strong exhaust mode setting key. When the user wants to refresh air inside the room promptly or in some such cases, ventilation can be carried out immediately by operating the extra-strong exhaust mode setting key.

In order to improve the exhaust efficiency in the extra-strong exhaust mode, a supplementary ventilation fan may be included, as in claim 3. The supplementary ventilation fan exhausts air from inside the room additionally to the ventilation by the air supply fan and the exhaust fan, the air inside the room can therefore be ventilated more promptly.

It is preferable for the ventilation system to have a heat exchange device according to claim 4, because when the room is being cooled or heated, it can prevent deterioration of the cooling or heating effect due to ventilation.

As in claim 5, heat exchange ventilation by using the heat exchange device or normal ventilation should preferably be selectable by switching, because in seasons such as spring and autumn when cooling or heating is not necessary, more efficient ventilation can be carried out by normal ventilation than by heat exchange ventilation.

As stated in claim 6, it is preferable to carry out normal ventilation when the extra-strong exhaust mode is set, because the normal ventilation provides ventilation efficiency better than that of the heat exchange ventilation so that exhaust in the extra-strong exhaust mode can be carried out more rapidly.

In addition to the manually operational setting keys mentioned above, the capacity setting means may be arranged so as to include an automatic mode setting key for setting an automatic mode in which each of the blowing capacities of the air supply fan and the exhaust fan can be varied automatically. Each of the above-mentioned keys is not limited to a pressing type, but may be a sliding type or a rotational type.

This system may also include a detecting sensor for detecting pollution degree of the air so that when the automatic mode is set, the blowing capacities of the air supply fan and the exhaust fan are automatically regulated based on detection outputs from the detecting sensor.

The detecting sensor for detecting pollution degree of the air may be a CO₂ sensor or a dust sensor. In the system adopting the CO₂ sensor, for example, when there are many people within a room and the CO₂ concentration has increased due to exhaled air from the people, it is possible to increase the blowing volume of the air supply and the exhaust, or to switch to the exhaust-rich operation automatically. When adopting the dust sensor, it is possible for the system to automatically sift to the exhaust-rich operation when tobacco smoke or dust increases in the room.

An arrangement in which the capacity setting means comprises a remote control device, allows users to switch the operation mode of the ventilation system freely from an arbitrary place in the room, which is convenient.

As discussed so far, this invention allows the user to operate the ventilation system in a desired condition, and provides a ventilation system that realizes comfortable air conditioning desired by the user.
Fig. 1 is a diagrammatic illustration of the structure of a ventilation system embodying this invention.
Fig. 2 is a plan view showing the structure of a remote control transmitter.
Fig. 3 is a flow chart showing a flow of control carried out by a control part.
Fig. 4 is a plan view of another structure of the remote control transmitter.

Referring to the attached drawings, preferred embodiments of this invention are hereinafter described in detail.

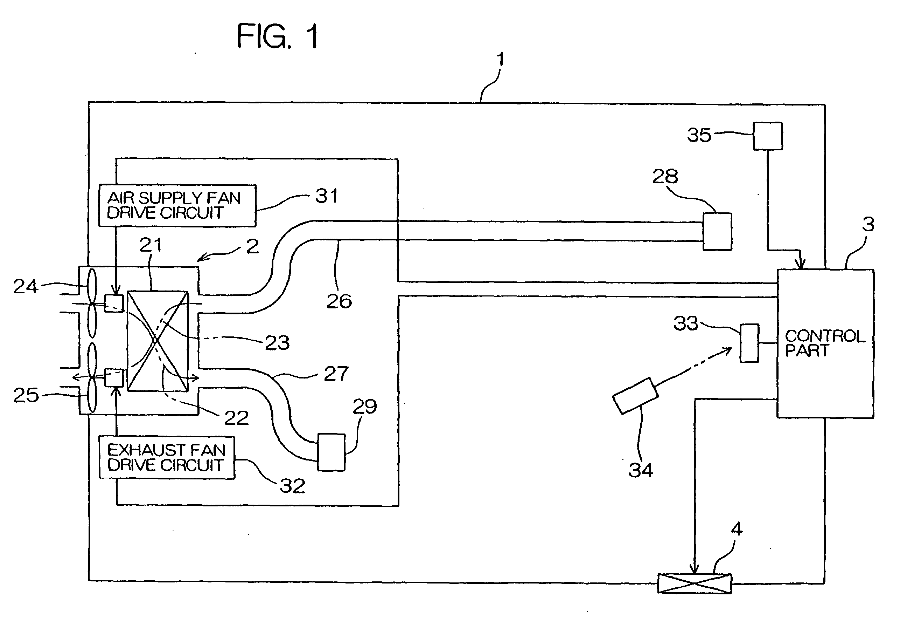

Fig. 1 is a diagrammatic illustration of the structure of a ventilation system embodying this invention. This ventilation system is intended to be installed in a house such as an airtight house and to forcibly introduce outside air into a room 1, and to forcibly exhaust air within the room 1 from the room to the outside.

This ventilation system comprises a heat exchange type ventilation device 2 housing a heat exchanger 21. The heat exchange type ventilation device 2 can perform heat exchange ventilation or normal ventilation by switching on an alternative basis. In the heat exchange ventilation, ventilation is carried out by crossing supply air and exhaust in the heat exchanger 21 so as to perform heat exchange between the supply air and the exhaust. The normal ventilation is carried out by making the exhaust from the room 1 bypass the heat exchanger 21 so as not to perform heat exchange between the supply air and the exhaust. An air supply path 22 and an exhaust path 23, which cross each other in the heat exchanger 21, are formed inside the heat exchange type ventilation device 2. An air supply fan 24 and an exhaust fan 25 are provided in the air supply path 22 and the exhaust path 23, respectively. Each one end of the air supply path 22 and exhaust path 23 is exposed to the outside from a wall such as an exterior wall of a house. Each of the other ends of the air supply path 22 and the exhaust path 23 is connected to an air inlet 28 through a duct 26, and to an exhaust outlet 29 through a duct 27, respectively, which air inlet 28 and exhaust outlet 29 being disposed in the ceiling of the room 1.

When the air supply fan 24 and the exhaust fan 25 are driven in this arrangement, the air (outside air) introduced from outside the house flows into the room 1 through the air supply path 22, the duct 26 and the air inlet 28, while the air within the room 1 is exhausted to the outside through the exhaust outlet 29, the duct 27 and the exhaust path 23.

The air inlet 28 and the exhaust outlet 29 are located approximately on a diagonal line of the room 1 with an appropriate interval therebetween.
Accordingly, the outside air introduced into the room 1 through the air inlet 28 is exhausted through the exhaust outlet 29 after going around a wide range of areas inside the room 1, by which the whole air inside the room 1 is efficiently ventilated.

The drive of the air supply fan 24 and the exhaust fan 25 is controlled by a control part 3 including CPU, RAM and ROM. More specifically, an air supply fan drive circuit 31 for driving the air supply fan 24 and an exhaust fan drive circuit 32 for driving the exhaust fan 25 are connected to the control part 3. The air supply fan drive circuit 31 and the exhaust fan drive circuit 32 are provided with taps for switching the blowing capacities of the air supply fan 24 and the exhaust fan 25 into a plurality of levels (for example, "extra-strong", "strong", and "weak"). Also, a remote control receiver 33 is connected to the control part 3 so that signals directed from a remote control transmitter 34 for setting the operation mode of this ventilation system are inputted into the remote control receiver 33. Additionally, a CO₂ sensor 35 for detecting CO₂ (carbon dioxide) inside the room 1 is connected to the control part 3. The control part 3 outputs driving signals to the air supply fan drive circuit 31 and the exhaust fan drive circuit 32 based on the signals inputted into it from the remote control receiver 33 and the CO₂ sensor 35 so as to switch the taps provided in each of the drive circuits 31 and 32, thereby controlling the drive of the air supply fan 24 and the exhaust fan 25.

A supplementary ventilation fan 4 disposed in the ceiling or a sidewall of the room 1 is also connected to the control part 3. This supplementary ventilation fan 4 functions only to exhaust the air from inside the room 1, and is controlled by the control part 3.

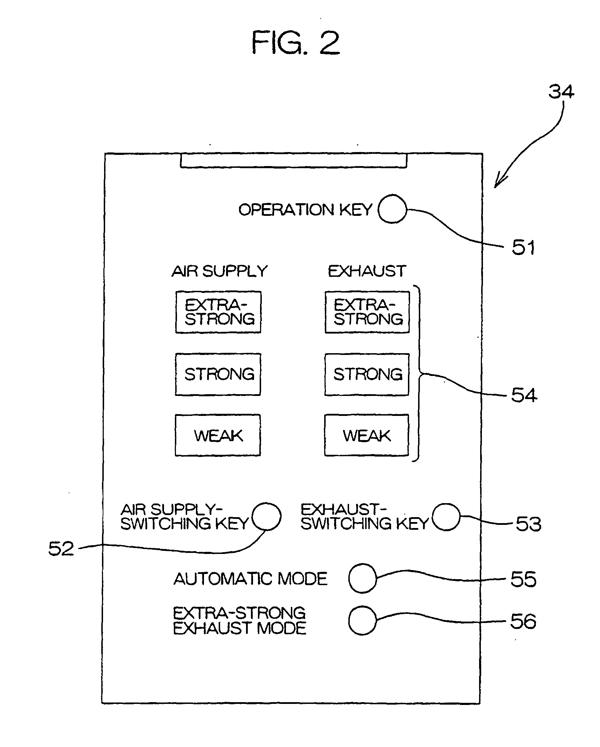

Fig. 2 is a plan view showing the structure of the remote control transmitter 34. The remote control transmitter 34 is provided with an operation key 51 for directing operation start/stop of the ventilation device 2, an air supply-switching key 52 for switching the air supply capacity of the air supply fan 24 into any of "extra-strong", "strong", and "weak" levels, and an exhaust switching key 53 for switching the exhaust capacity of the exhaust fan 25 into any of "extra-strong", "strong", and "weak" levels. Also, this remote control transmitter 34 has a group of indicators 54 for indicating the capacities of the fans 24 and 25, which are set by the air supply-switching key 52 and the exhaust-switching key 53.

It is also possible to omit the air supply-switching key 52 and the exhaust-switching key 53 and to provide each of the indicators in the group with a function of a key (switch) so that when the indicators in the group are selectively pressed, the capacities of the air supply fan 24 and the exhaust fan 25 are set according to the capacities indicated by the pressed indicators.

Furthermore, the remote control transmitter 34 is provided with an automatic mode key 55 for setting an automatic mode for automatically regulating the capacities of the air supply fan 24 and the exhaust fan 25 in accordance with the CO₂ concentration inside the room 1 (see Fig. 1), and an extra-strong exhaust mode key 56 for setting an extra-strong exhaust mode for rapidly exhausting the air from inside the room 1.

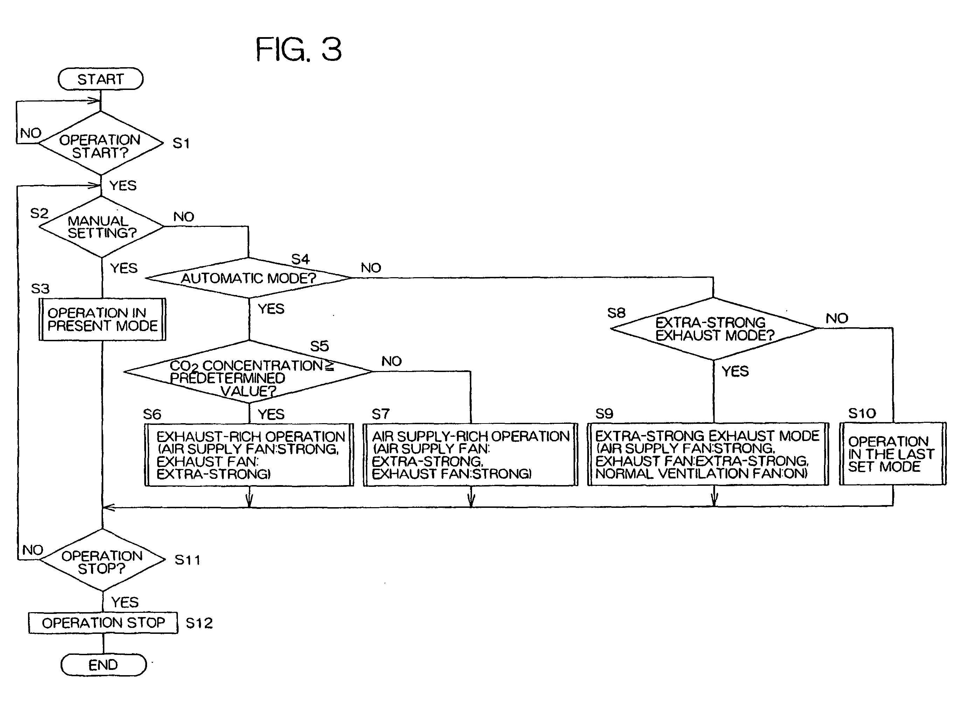

Fig. 3 is a flow chart showing a flow of control performed by the control part 3. When the operation key 51 is pressed by the user so as to direct this ventilation system to start operating (Step S1), the control part judges firstly whether the capacities of the air supply fan 24 and the exhaust fan 25 have been manually set or not (Step S2), that is, it judges whether the air supply-switching key 52 and/or the exhaust-switching key 53 have/has been operated by the user.

When either or both of the capacities of the air supply fan 24 and the exhaust fan 25 has/have been manually set by operating either or both of the air supply-switching key 52 and the exhaust-switching key 53, the fans 24 and 25 are driven at the capacity for each that has been set manually, and the ventilation system 2 starts the operation (Step S3).

On the other hand, when manual setting by the air supply- switching key 52 and the exhaust-switching key 53 has not been done, the program proceeds from Step S2 to Step S4 for judging whether the automatic mode key 55 has been pressed or not. If it is determined that the automatic mode key 55 has been pressed and the automatic mode for automatically regulating the capacities of the air supply fan 24 and the exhaust fan 25 has been set, the output of the CO₂ sensor 35 is checked so as to determine whether the CO₂ concentration inside the room 1 is not less than a predetermined concentration value (Step S5). If it is determined that the CO₂ concentration inside the room 1 is the predetermined value or more and therefore the air inside the room 1 is polluted, for instance, the air supply fan 24 is driven by the "strong" mode, while the exhaust fan 25 is driven by the "extra-strong" mode, thereby performing the exhaust-rich operation in which the volume of exhaust from the room 1 exceeds the volume of air supply introduced into the room 1 (Step S6). Thus, the polluted air or the air containing plenty of carbon dioxide inside the room 1 can be promptly exhausted without flowing into a space adjacent to the room 1.

When the CO₂ concentration is found less than the above mentioned predetermined value in Step S5, for example, the air supply fan 24 is driven by the "extra-strong" mode, while the exhaust fan 25 is driven by the "strong" mode so as to perform the air supply-rich operation in which the volume of air supply introduced into the room 1 exceeds the volume of exhaust from the room 1 (Step S7). This brings the air pressure inside the room 1 to be higher than that in the space adjacent to the room 1 so as to prevent odors and the like generated in the adjacent space such as a toilet from flowing into the room 1.

Additionally, the exhaust-rich operation to be carried out in Step S6 may be achieved by driving the air supply fan 24 by the "weak" mode while driving the exhaust fan 25 by the "strong" mode, or by driving the air supply fan 24 by the "weak" mode while driving the exhaust fan 25 by the "extra-strong" mode. Also, the air supply-rich operation to be carried out in Step S7 may be achieved by driving the air supply fan 24 by the "extra-strong" mode and driving the exhaust fan 25 by the "weak" mode, or by driving the air supply fan 24 by the "strong" mode while driving the exhaust fan 25 by the "weak" mode.

When the extra-strong exhaust mode key 56 is pressed to set the extra-strong exhaust mode with no manual setting nor pressing of the automatic mode key 55 having been done, either of the judgments in Step S2 and Step S4 is denied, and it is determined in Step S8 that the extra-strong exhaust mode has been set. In the extra-strong exhaust mode, the air supply fan 24 is driven by the "strong" mode with the exhaust fan 25 being driven by the "extra-strong" mode, as well as the supplementary ventilation fan 4 is driven (Step S9). Accordingly, in the extra-strong exhaust mode, the volume of exhaust from the room 1 increases further than that in the exhaust-rich operation in which the air supply fan 24 is driven by the "strong" mode with the exhaust fan 25 being driven by the "extra-strong" mode, so that the polluted air inside the room 1 is more rapidly exhausted.

When none of the air supply-switching key 52, the exhaust-switching key 53, the automatic mode key 55 and the extra-strong exhaust mode key 56 has been operated after the operation key 51 has been pressed in Step S1, any of the judgments in Step S2, Step S4 and Step S8 is denied. The program then proceeds from Step S8 to Step 10, where this ventilation system starts to operate in the mode that has been set in the operation immediately before the current operation (the last operation). That is, when the capacities of the air supply fan 24 and exhaust fan 25 have been manually set in the last operation, the air supply fan 24 and the exhaust fan 25 are driven at those manually set capacities. When the automatic mode or the extra-strong exhaust mode has been set in the last operation, this ventilation system is operated according to the last set mode. Meanwhile, the mode selected in the operation immediately before the current operation has been memorized in memory such as RAM housed in the control part 3.

During the operation of the ventilation system, whether the operation stop of the ventilation system 2 has been directed by operating the operation key 51 or not is repeatedly judged (Step S11). The program returns from Step S11 to Step 2 so as to repeatedly carry out the procedure starting from Step S2 described above until the operation stop of the ventilation system 2 is directed. Accordingly, in the case, for example, where the manual setting is once done and the automatic mode or the extra-strong exhaust mode is selected afterwards, the program proceeds from Step S2 to Step S4 so as to operate the system in the newly set mode. Meanwhile, when the air supply-switching key 52 and/or the exhaust-switching key 53 have/has been operated during operation in the automatic mode or the extra-strong exhaust mode, the air supply fan 24 and/or the exhaust fan 25 are/is driven at the capacity for each that has been newly set manually. When either the air supply-switching key 52 or the exhaust-switching key 53 has been operated, the one that has not been operated is driven at the capacity set in the last operation. Finally, when the user presses the operation key 51 so as to direct this ventilation system to stop the operation, the drive of both the ventilation device 2 and the supplementary ventilation fan 4 is stopped (Step S12), thereby completing this process.

As discussed so far, this embodiment allows the user to modify each of the capacities of the air supply fan 24 and exhaust fan 25 separately by operating the air supply-switching key 52 and the exhaust-switching key 53 provided in the remote control transmitter 34. Accordingly, unlike the conventional ventilation systems where the operation mode has been fixed to be either an air supply-rich mode or an exhaust-rich mode, this embodiment can carry out appropriate ventilating operation in accordance with the condition inside the room 1.

Also, by setting each of the capacities of the air supply fan 24 and the exhaust fan 25 separately irrespective of the length and the girth of each of the ducts 26 and 27, this system can surely perform the air supply-rich operation, the exhaust-rich operation or the neutral operation in which the volume of air supply from the air inlet 28 equals to the volume of exhaust from the exhaust outlet 29. Thus, unlike the ventilation systems of the conventional kind, this system can be prevented from being kept operating in an unwanted mode.

Additionally, this embodiment includes an automatic mode for automatically regulating the capacities of the air supply fan 24 and the exhaust fan 25 so that with this mode set, the operation mode of this ventilation system is automatically switched between the air supply-rich operation and the exhaust-rich operation based on the output from the CO₂ sensor 35. This enables the ventilating operation to have further improved efficiency, as well as enables the user to save the trouble for manually setting the capacities of the air supply fan 24 and the exhaust fan 25.

In the discussion above, an embodiment having a CO₂ sensor 35 as a detecting sensor has been described. However, the detecting sensor may be a sensor other than the CO₂ sensor such as a dust sensor capable of detecting dust particles in the air. The dust sensor is disposed, for example, in the vicinity of the exhaust outlet 29. The air to be exhausted from the exhaust outlet 29 is air that has moved around the inside of the room 1. Accordingly, if the air inside the room 1 is polluted with dust and the like, the air in the vicinity of the exhaust outlet 29 is also polluted. The dust sensor therefore detects dust in the air passing here.

The dust sensor comprises, for instance, a light-emitting element and a light-receiving element being arranged such that the light emission volume can be detected by the light-receiving element. When making the air to be exhausted pass between the light-emitting element and the light-receiving element, the quantity of the light received by the light-receiving element decreases when the air to be exhausted is polluted. Thus, the pollution degree of the air can be detected according to the quantity of the light received by the light-receiving element. Such a dust sensor has already been publicly known.

It is also possible to adopt such a dust sensor so as to deliver outputs of the dust sensor to the control part 3, thereby switching the blowing capacities of the air supply fan 24 and exhaust fan 25. For instance, when the air inside the room 1 is polluted, the blowing capacity of the exhaust fan 25 is raised and the blowing capacity of the air supply fan 24 is modified to be somewhat lower than that of the exhaust fan 25. Or, the supplementary ventilation fan 4 may be driven according to need.

Furthermore, this embodiment includes an extra-strong exhaust mode that performs exhaust-rich operation in which the air supply fan 24 is driven in the "strong" mode with the exhaust fan 25 being driven in the "extra-strong" mode, while driving the supplementary ventilation fan 4. This enables prompt ventilation between the air inside the room 1 polluted with tobacco smoke or the like and fresh air from the outside.

An embodiment of this invention has been explained so far. However, this invention is not intended to be limited to the embodiment above. For example, although the above embodiment is arranged so as to allow each of the capacities of the air supply fan 24 and the exhaust fan 25 to be manually set separately, another embodiment may be provided with a plurality of setting patterns available by combination of the capacity of the air supply fan 24 and that of the exhaust fan 25 so that the user can select a desirable pattern from among those patterns.

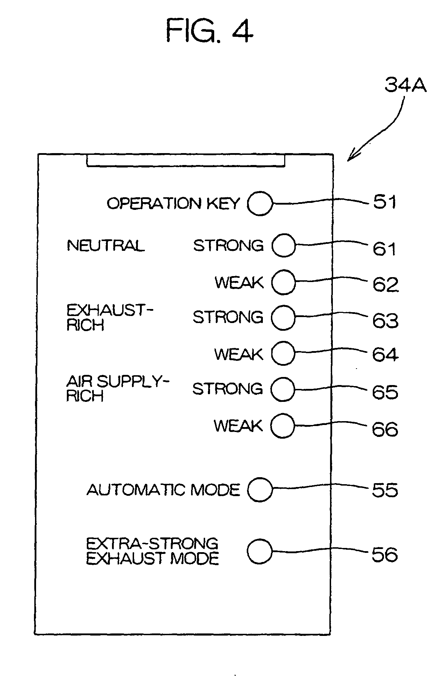

As shown in Fig.4, a remote control transmitter 34A is provided with pattern selection keys 61, 62, 63, 64, 65 and 66 for selecting any one from among "strong" or "weak" neutral operation, "strong" or "weak" exhaust-rich operation, and "strong" or "weak" air supply-rich operation. By pressing any one of these pattern selection keys 61-66, the user can select the capacities of the air supply fan 24 and the exhaust fan 25 set for each pattern. The capacities of the air supply fan 24 and the exhaust fan 25 for each setting pattern are shown in Table 1 below.

**Table 1**

| Setting pattern | | Air supply fan | Exhaust fan |
|---|---|---|---|
| Neutral operation | Strong | Strong | Strong |
| | Weak | Weak | Weak |
| Exhaust-rich operation | Strong | Strong | Extra-strong |
| | Weak | Weak | Strong |
| Air supply-rich operation | Strong | Extra-strong | Strong |
| | Weak | Strong | Weak |

Meanwhile, when the extra-strong exhaust mode is set in the above-described embodiment, the system performs the exhaust-rich operation in which the volume of exhaust exceeds the volume of air supply, while driving the supplementary ventilation fan 4. Instead of or in addition to the above described arrangement, when the extra-strong exhaust mode is set, it is possible to drive the air supply fan 24 and the exhaust fan 25 in such a manner that the volume of exhaust surpasses the volume of air supply, as well as to make the heat exchange type ventilation device 2 perform normal ventilation. This is because exhaust can be more smoothly carried out since the exhaust from the room 1 does not pass through the heat exchanger 21 in the normal ventilation.

Incidentally, in cases other than the above modification in which the heat exchange type ventilation device 2 is made perform normal ventilation in the extra-strong exhaust mode, the heat exchange type ventilation device 2 can be duly switched between the heat exchange ventilation and the normal ventilation according to the setting of the user and the season.

Although it is stated in the case of the embodiment above that this ventilation system is installed in an airtight house, it may also be installed in houses other than airtight houses, or buildings such as offices, hospitals, nursing homes, and schools.

In addition, various modifications in design are possible within the scope of the technical matters stated in the claims.

## Claims

1. A ventilation system for forcibly introducing outside air into a room (1) and forcibly exhausting air from within the room (1) to the outside, comprising:
an air inlet (28) and an exhaust outlet (29) being disposed to face inside said room (1);
an air supply fan (24) for introducing outside air into said room (1) through said air inlet (28);
an exhaust fan (25) for exhausting air within said room (1) to the outside through said exhaust outlet (29);
capacity setting means (34; 34A) for setting blowing capacities of said air supply fan (24) and said exhaust fan (25); and
control means (3, 31, 32) for controlling drive of said air supply fan (24) and said exhaust fan (25) based on the contents set by said capacity setting means (34),
**characterized in that** said capacity setting means (34A) includes pattern selection keys (61, 62, 63, 64, 65, 66) for selecting one pattern from among a plurality of setting patterns available by combination of a blowing capacity of said air supply fan (24) and a blowing capacity of said exhaust fan (25), wherein the plurality of setting patterns includes an air supply-rich ventilation pattern and an exhaust-rich ventilation pattern.

2. The system of claim 1, **characterized in that** said capacity setting means (34; 34A) includes an extra-strong exhaust mode setting key (56) for setting an extra-strong exhaust mode which is a drive mode for promptly ventilating air inside said room (1).

3. The system of claim 2, **characterized by** a supplementary ventilation fan (4) provided for additionally exhausting air from inside said room (1) to the outside, whose drive being controlled by said control means (3),
wherein with said extra-strong exhaust mode being set, said control means (3) drives said air supply fan (24) and said exhaust fan (25) such that the volume of exhaust from said exhaust outlet (29) surpasses the volume of air supply from said air inlet (28), while driving said supplementary ventilation fan (4) at the same time.

4. The system of any one of claims 1 to 3, **characterized by** a heat exchange device (21) for performing heat exchange between the outside air introduced into the room (1) and the exhaust from inside the room (1).

5. The system of claim 4, **characterized in that** said ventilation system is capable of performing ventilation by alternatively switching the operation between heat exchange ventilation by way of said heat exchange device (21) and normal ventilation with not using said heat exchange device (21).

6. The system of claim 5, **characterized in that** said control means (3) controls the drive so as to perform the normal ventilation when said extra-strong exhaust mode is set.

## Patentansprüche

1. Ventilationssystem zum Zwangseinführen von Außenluft in einen Raum (1) und zum Zwangsabführen von Luft aus dem Raum (1) heraus nach außen, mit:
einem Lufteinlass (28) und einem Abgasauslass (29), angeordnet, um in das Innere des Raumes (1) zu weisen;
einem Luftzuführlüfter (24) zum Einführen von Außenluft in den Raum (1) durch den Lufteinlass (28) hindurch;
einem Abgaslüfter (25) zum Ausstoßen von Luft aus dem Raum (1) heraus nach außen, und zwar durch den Abgasauslass (29) hindurch;
Kapazitätseinstellmitteln (34; 34A) zum Einstellen von Blaskapazitäten des Luftzuführlüfters (24) und des Abgaslüfters (25); und
Steuermitteln (3, 31, 32) zum Steuern des Antriebs des Luftzuführlüfters (24) und des Abgaslüfters (25) auf der Grundlage von Inhalten, die mittels der Kapazitätseinstellmittel (34) eingestellt sind,
**dadurch gekennzeichnet, dass** die Kapazitätseinstellmittel (34A) Musterauswahltasten (61, 62, 63, 64, 65, 66) aufweisen, zum Auswählen eines Musters aus einer Vielzahl von Einstellmustern, die verfügbar sind durch eine Kombination einer Blaskapazität des Luftzuführlüfters (24) und einer Blaskapazität des Abgaslüfters (25), wobei die Vielzahl von Einstellmustern ein luftzufuhr-reiches Belüftungsmuster und ein abgas-reiches Belüftungsmuster beinhalten.

2. System nach Anspruch 1, **dadurch gekennzeichnet, dass** die Kapazitätseinstellmittel (34; 34A) eine Extrastark-Abgasmodus-Einstelltaste (56) zum Einstellen eines extrastarken Abgasmodus beinhalten, bei dem es sich um einen Antriebsmodus zum sofortigen Ventilieren von Luft in dem Raum (1) handelt.

3. System nach Anspruch 2, **gekennzeichnet durch** einen Hilfsventilationslüfter (4), der vorgesehen ist zum zusätzlichen Ausstoßen von Luft aus dem Inneren des Raumes (1) nach außen, wobei dessen Antrieb gesteuert wird **durch** die Steuermittel (3),
wobei die Steuermittel (3) dann, wenn der Extrastark-Abgasmodus eingestellt ist, den Luftzuführlüfter (24) und den Abgaslüfter (25) derart ansteuern, dass das Abgasvolumen aus dem Abgasauslass (29) das Luftzuführvolumen aus dem Lufteinlass (28) übersteigt, während zur gleichen Zeit der Hilfsbelüftungslüfter (4) angetrieben wird.

4. System nach einem der Ansprüche 1 - 3, **gekennzeichnet durch** ein Wärmetauschergerät (21) zum Durchführen eines Wärmeaustausches zwischen der in den Raum (1) eingeführten Außenluft und dem Abgas aus dem Inneren des Raumes (1).

5. System nach Anspruch 4, **dadurch gekennzeichnet, dass** das Ventilationssystem dazu in der Lage ist, eine Ventilation durchzuführen, indem alternativ der Betrieb umgeschaltet wird zwischen einer Wärmetauscherventilation mittels des Wärmetauschergerätes (21) und einer normalen Ventilation, bei der das Wärmetauschergerät (21) nicht verwendet wird.

6. System nach Anspruch 5, **dadurch gekennzeichnet, dass** die Steuermittel (3) den Antrieb so steuern, dass die normale Ventilation durchgeführt wird, wenn der Extrastark-Abgasmodus eingestellt ist.

## Revendications

1. Système de ventilation pour introduire de force de l'air extérieur dans une pièce (1) et pour évacuer de force de l'air de l'intérieur de la pièce (1) vers l'extérieur, comprenant :
une entrée d'air (28) et une sortie d'évacuation (29) disposées de manière à être orientées vers l'intérieur de ladite pièce (1) ;
un ventilateur d'alimentation en air (24) pour introduire de l'air extérieur dans ladite pièce (1) à travers ladite entrée d'air (28) ;
un ventilateur d'évacuation (25) pour évacuer de l'air de l'intérieur de ladite pièce (1) vers l'extérieur à travers ladite sortie d'évacuation (29) ;
des moyens de réglage de capacité (34 ; 34A) pour régler des capacités de ventilation dudit ventilateur d'alimentation en air (24) et dudit ventilateur d'évacuation (25) ; et
des moyens de commande (3, 31, 32) pour commander ledit ventilateur d'alimentation en air (24) et ledit ventilateur d'évacuation (25) sur la base des contenus réglés par lesdits moyens de réglage de capacité (34),
**caractérisé en ce que** lesdits moyens de réglage de capacité (34A) comprennent des touches de sélection de configuration (61, 62, 63, 64, 65, 66) pour sélectionner une configuration parmi une pluralité de configurations de réglage disponibles par la combinaison d'une capacité de ventilation dudit ventilateur d'alimentation en air (24) et d'une capacité de ventilation dudit ventilateur d'évacuation (25), dans lequel la pluralité de configurations de réglage comprennent une configuration de ventilation riche en alimentation en air et une configuration de ventilation riche en évacuation.

2. Système selon la revendication 1, **caractérisé en ce que** lesdits moyens de réglage de capacité (34 ; 34A) comprennent une touche de réglage de mode d'évacuation extra-forte (56) pour régler un mode d'évacuation extra-forte qui est un mode de commande pour ventiler rapidement l'air à l'intérieur de ladite pièce (1).

3. Système selon la revendication 2, **caractérisé par** un ventilateur soufflant supplémentaire (4) prévu pour évacuer en plus de l'air de l'intérieur de ladite pièce (1) vers l'extérieur, qui est commandé par lesdits moyens de commande (3),
dans lequel, ledit mode d'évacuation extra-forte étant réglé, lesdits moyens de commande (3) commandent ledit ventilateur d'alimentation en air (24) et ledit ventilateur d'évacuation (25) de sorte que le volume d'évacuation par ladite sortie d'évacuation (29) dépasse le volume d'air délivré par ladite entrée d'air (28), tout en commandant ledit ventilateur soufflant supplémentaire (4) simultanément.

4. Système selon l'une quelconque des revendications 1 à 3, **caractérisé par** un dispositif d'échange de chaleur (21) pour effectuer un échange de chaleur entre l'air extérieur introduit dans la pièce (1) et l'évacuation de l'intérieur de la pièce (1).

5. Système selon la revendication 4, **caractérisé en ce que** ledit système de ventilation est capable d'effectuer une ventilation en commutant le fonctionnement alternativement entre une ventilation à échange de chaleur au moyen dudit dispositif d'échange de chaleur (21) et une ventilation normale sans utilisation dudit dispositif d'échange de chaleur (21).

6. Système selon la revendication 5, **caractérisé en ce que** lesdits moyens de commande (3) effectuent la commande de manière à effectuer la ventilation normale lorsque ledit mode d'évacuation extra-forte est réglé.
